Europäisches Patentamt

(19) European Patent Office

Office européen des brevets

(11) Publication number: **0 045 411**
A2

# EUROPEAN PATENT APPLICATION

(12)

(21) Application number: 81105554.0

(22) Date of filing: 15.07.81

(51) Int. Cl.³: **B 60 G 5/04**
**B 60 G 11/10**

(30) Priority: 04.08.80 US 174968

(43) Date of publication of application:
10.02.82 Bulletin 82/6

(84) Designated Contracting States:
DE FR GB IT

(71) Applicant: EATON CORPORATION
100 Erieview Plaza
Cleveland Ohio 44114(US)

(72) Inventor: McNinch, Joseph Hamilton, Jr.
11314 Brookfield
Livonia, Michigan 48150(US)

(74) Representative: Wagner, Karl H.
P.O. Box 246 Gewuerzmuehlstrasse 5
D-8000 München 22(DE)

(54) Equalized four-spring tandem axle suspension.

(57) An equalized four-spring tandem axle suspension with upper and lower torque rods provides pivots between the leaf springs and axles to eliminate uneven load sharing between axles and uneven load distribution within each leaf spring during articulation of the suspension.

EP 0 045 411 A2

Croydon Printing Company Ltd.

INTRODUCTION

This invention relates to an apparatus for load sharing between tandem axles in an equalized leaf spring suspension.

BACKGROUND OF THE INVENTION

Tandem axle four-spring suspensions have been used successfully in ground vehicles for many years. The simplest configuration of such suspensions is to independently spring each axle directly to a vehicle frame. It has been found to be advantageous to add an equalizer to such suspensions, providing the suspension with an ability to load share during articulation, i.e., to allow one axle to move vertically with respect to the other axle while retaining equal loading between the two axles. An equalizer in combination with leaf springs in a tandem axle suspension further provides the advantage of coupling undesirable ground induced vibrations from one leaf spring to the other, thereby reducing the amount of vibration coupled to the vehicle frame.

In each of the above configurations, it has been found desirable to use a radius rod disposed between the vehicle frame and each leaf spring axle connection. Such radius rods are typically mounted pivotally at their respective ends in order to facilitate desirable vertical axle motion due to load variations while maintaining axle alignment with the vehicle frame under steady state conditions. However, use of a radius rod in association with each leaf spring axle connection results in the undesirable effect that the driving and braking axle torques are reacted by the associated leaf spring, generating a significant torque loading in the spring and requiring a more complex spring design procedure and a heavier spring to accommodate these torques.

To overcome the cost and weight penalties implicit in a heavier spring and the additional complexity in designing these springs to accommodate the axle torque loadings, it has been found advantageous in equalized suspensions to add a torque rod for each axle assembly. The added torque rod acts, in coaction with the radius rod and each spring, to restrain axle driving and braking torques and to eliminate torque loading of the leaf springs while continuing to permit vertical axle displacement. However, the inclusion of the torque rod has the undesirable effect of causing unbalanced or cantilevered loads within each leaf spring when the associated axle is vertically displaced or articulated. These cantilevered loads in turn result in uneven load sharing between the axles upon such articulation. To accomodate such cantilevered loading a more complex spring design procedure and a heavier spring is again required.

## BRIEF DESCRIPTION OF THE INVENTION

The present invention relates to an equalized four spring tandem axle suspension of the type including, at each side of the vehicle frame, a pair of front and rear leaf springs supporting the vehicle frame and supported respectively by the front and rear axles, an equalizer mounted on the frame to balance loading between the axles, and torque rods associated with each axle and operative to allow vertical axle displacement while preventing axle rotation due to axle torque. According to an important feature of the present invention, the means connecting each of the springs to the associated axle includes means allowing that spring to rotate relative to the associated axle. This arrangement has the advantage of eliminating the cantilevered spring loading present in prior art equalized, torque rod suspensions without resort to complex spring designs or heavier springs.

In the disclosed embodiments of the invention, each of the rotational spring/axle connections allows rotation about a substantially horizontal and substantially transverse axis.

According to another feature of one embodiment of the invention, the rotational means are operative to provide rolling contact between the axle and its associated leaf spring to minimize friction during rotation of the leaf spring relative to its associated axle.

According to another feature of another embodiment of the invention, the spring rotation feature is provided by an elastomeric member positioned between, and attached to the leaf spring and its associated axle, thus offering the advantage of a very light weight axle pivot design.

According to another feature of still another embodiment of the invention, the spring rotation feature is provided by a first elastomeric member positioned between one side of the spring and its associated axle and a second elastomeric member positioned on the opposite side of the spring. This arrangement ensures that the elastomeric members are not subjected to tensile loading.

Various other features and advantages of the invention will be apparent upon reading the following specification which, along with the accompanying drawings, describes and discloses preferred illustrative embodiments in detail.

BRIEF DESCRIPTION OF THE DRAWINGS

Figure 1 is a fragmentary side elevational view of a motor vehicle embodying an equalized four-spring tandem axle leaf spring suspension of the prior art;

Figure 2 is a fragmentary side elevation view of a motor vehicle embodying an equalized four-spring tandem axle leaf spring suspension according to the present invention;

Figure 3 is an enlarged fragmentary view of the left-hand side of Figure 2 showing details of the axle pivot structure;

Figure 4 is an enlarged fragmentary view of an alternative pivot embodiment;

Figure 5 is an enlarged fragmentary view of another alternative pivot embodiment; and

Figure 6 is an enlarged fragmentary view of still another alternative pivot embodiment.

DETAILED DESCRIPTION OF THE SPECIFIC EMBODIMENTS

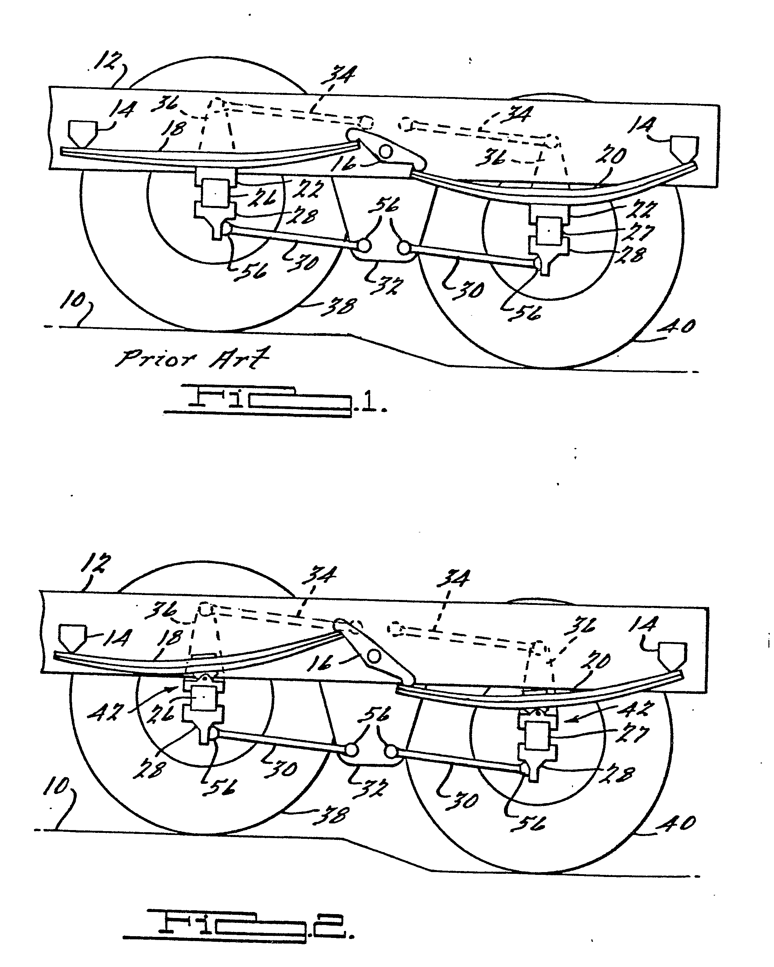

Referring to Figure 1, a motor vehicle embodying a prior art equalized four-spring tandem axle suspension is shown in side elevational view on an irregular ground surface 10. The motor vehicle of Figure 1 includes a frame having a near frame member 12 and a second frame member (not shown) in spaced parallel relation to near frame member 12. Frame member 12 is supported through brackets 14 and an equalizer 16 by front and rear leaf springs 18 and 20 respectively. Equalizer 16 is pivotally mounted to the frame and is free to pivot about its center. A similar spring, bracket, and equalizer assembly is associated with the other frame member so that the vehicle frame is supported by four springs, two on each side of the frame with each spring engaging a bracket 14 at one end and an equalizer 16 at its other end. An upper axle bracket 22 is rigidly secured to each leaf spring and to a respective axle 26, 27. A lower axle bracket 28 is rigidly secured to each axle 26, 27. A lower torque rod 30 is pivotally connected at its one end to each lower axle bracket 28 and at its other end to a frame bracket 32. Two torque rods, one at each side of the frame, are thus provided for each axle. A central upper torque rod 34 (shown in phantom behind frame member 12,) is also provided for each axle. Each rod 34 is connected at one end to a bracket 36 rigid with each axle and at its other end to frame member 12. Each axle thus has two lower torque rods 30 transversely spaced on opposite sides of the frame and a single centrally disposed upper torque rod 34. Brackets 36 may be provided by or attached to the differential bell housing or "banjo" in applications where the axles are powered. The connection between lower rods 30 and brackets 28 and 32, and between upper rods 34 and brackets 36 and frame 12, comprise ball joints 56.

The prior art suspension of Figure 1 is shown in an articulated condition with front ground wheel 38 elevated with respect to rear ground wheel 40. As shown in its articulated state, the prior art suspension suffers from unequal loading of front and rear leaf springs 18 and 20 due to the cantilever load imposed on forward leaf spring 18 in the region between upper axle bracket 22 and bracket 14. This cantilever load is evidenced by the substantially flattened condition of that region of spring 18. The corresponding region in rear spring 20 is more lightly loaded as is evidenced by the more pronounced curvature of that region.

Equalizer 16, by virtue of its pivotal mounting on frame member 12, is free to pivot about its center to balance the loads in the leaf spring regions between the tandem axles.

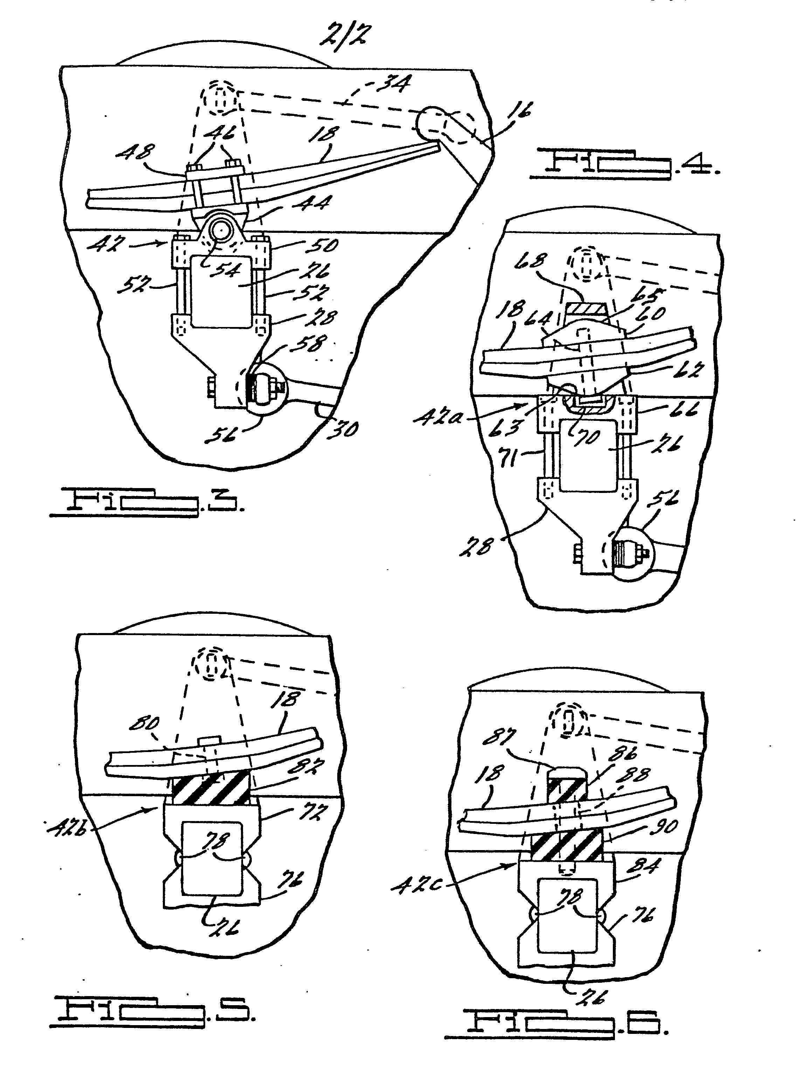

Referring now to Figure 2, a motor vehicle embodying the suspension of the present invention is seen. It will be noted that axle pivot assemblies 42 replace the upper axle brackets 22 of Figure 1. Axle pivot assemblies 42 permit leaf springs 18, 20 to rotate with respect to axles 26, 27 as the axles undergo relative vertical displacement, as seen in the articulated state of the suspension in Figure 2, and thereby permit the spring 18, 20 to carry equal loads. In contrast to the flattened condition of the forward portion of spring 18 in the prior art suspension of Figure 1, leaf spring 18 in the invention suspension of Figure 2, given the same axle displacement as in Figure 1, assumes a smooth arc along its entire length from bracket 14 to equalizer 16, reflecting generally uniform stress along the length of spring 18 and generally equal loading as between front spring 18 and rear spring 20. Such equal loading during suspension articulation is a direct result of the rotation permitted by axle pivot assemblies 42.

Referring now more particularly to Figure 3, axle pivot assemblies 42 may be seen in more detail. Each pivot assembly 42 includes a pivot bracket 44, an upper plate 48, bolts 46 clamping bracket 44 and plate 48 to the upper and lower faces of the associated spring, an axle pivot bracket 50, and a cylindrical pivot pin 54 received in aligned horizontal bores in brackets 44 and 50. Pin 54 is retained in brackets 44 and 50 by conventional snap rings (not shown). Each axle pivot bracket 50, and thereby the associated pivot assembly 42, is secured to the associated axle by bolts 52 passing through through bores in bracket 50 for engagement with threaded blind bores in lower axle bracket 28. The pivot assemblies provide rotational freedom between brackets 44 and 50 in a vertical plane.

Brackets 28, and hence the associated axles, are positioned with respect to frame 12 by adding an appropriate number of shims 58 between ball joints 56 and brackets 28 and 32. Upper torque rods 34 are preferably attached and positioned in a similar manner.

Referring now more particularly to Figure 4, an alternative axle pivot assembly 42a is disclosed. Each axle pivot assembly 42a includes an upper block 60; a lower block 62; a bolt 64, passing upwardly through through bores in the lower block 62 and the associated spring for engagement with a threaded blind bore in upper block 60; an upper axle bracket 66 defining a cavity 70 receiving the head of bolt 64; and an inverted saddle 68 rigidly secured to bracket 66 and encircling the adjacent portion of the associated spring to preclude disengagement of the spring from the axle. Lower block 62 has an outwardly projecting generally cylindrical surface contour 63. This cylindrical surface contour provides rolling contact between surface contour 63 of block 62 and the substantially planar upper surface of upper axle bracket 66. Upper block 60 has a generally cylindrical surface contour 65 similar to that of lower block 62 and is contoured to provide a constant operating clearance between contour 65 and the adjacent under surface of saddle 68.

Each axle pivot bracket 66, and thereby the associated pivot assembly 42a, is secured to the associated axle by bolts 71 passing through through bores in bracket 66 for engagement with threaded blind bores in lower axle bracket 28.

Referring now more particularly to Figure 5, a further alternative axle pivot assembly 42b is disclosed. Upper axle bracket 72 and lower axle bracket 76 are attached to axle 26 by welds 78 along a horizontal neutral axis of axle 26. A bolt 80 secures and locates the leaves of spring 18 to each other. Pivot assembly 42b is provided by an elastomeric block 82 adhesively bonded in a conventional manner at its respective upper and lower surfaces to the lower face of leaf spring 18 and the upper face of upper axle bracket 72. In operation, block 82 provides the desired degree of rotational freedom between leaf spring 18 and upper axle bracket 72 while precluding any significant vertical or horizontal relative displacement between leaf spring 18 and upper axle bracket 72.

Referring now more particularly to Figure 6, another alternative axle pivot assembly 42c is disclosed. In this embodiment, in a manner similar to the embodiment of Figure 5, upper axle bracket 84 and lower axle bracket 76 are attached to axle 26 by welds 78. Pivot assembly 42c includes an elastomeric rebound block 86 positioned on top of spring 18, an elastomeric support block 90 disposed between spring 18 and upper axle bracket 84, and a bolt 87 passing downwardly and slidably through a bore in block 86, through an enlarged bore or longitudinal slot 88 in spring 18, and slidably through a bore in block 90 for engagement in a blind threaded bore in the upper face of upper axle bracket 84. The head of bolt 87 is sufficiently large to serve as a bearing surface for elastomeric rebound block 86. The enlarged bore or longitudinal slot 88 through which bolt 87 passes permits relative rotation in a longitudinal vertical plane between spring 18 and bolt 87. Elastomeric support block 90 locates spring 18 in a position generally intermediate the ends of bolt 87, permitting the desired relative rotation.

It is to be understood that the invention has been described with reference to specific embodiments which provide the features and advantages of this invention, and that such specific embodiments are susceptible of modification as will be apparent to those skilled in the art; accordingly, the foregoing description is not to be construed in a limiting sense.

WHAT IS CLAIMED:

1. In a tandem axle four spring suspension for supporting a vehicle frame on first and second axles located transversely to the frame, the suspension including at each side of the frame first and second leaf springs adapted to support the frame; means adapted to respectively connect the first and second leaf springs to the first and second axles; an equalizer mounted on the frame and operative when so mounted to balance load forces between the first and second axles; and means operative to connect each of the axles with the frame to restrain axle torque; the improvement wherein:

the means adapted to connect said springs to the associated axle includes rotational means operative to allow each said spring to rotate relative to that axle.

2. A tandem axle four spring suspension according to Claim 1 wherein said springs are allowed to rotate relative to the associated axle about a substantially horizontal and substantially transverse axis.

3. A tandem axle four spring suspension according to Claim 2 wherein the means operative to connect each of the axles with the frame comprises, for each axle, at least two torque rods extending between that axle and the frame.

4. A tandem axle four spring suspension according to Claim 1 wherein said rotational means is operative to provide substantially rolling contact during said relative rotation.

5. A tandem axle four spring suspension according to Claim 1 wherein, for each said spring, said rotational means comprises an elastomeric member positioned between, and attached at opposed surfaces thereof respectively to, this spring and the associated axle.

6. A tandem axle four spring suspension according to Claim 1 wherein, for each said spring, said rotational means includes a first elastomeric member positioned between one side of said one spring and the associated axle and a second elastomeric member positioned on the opposite side of said one spring.

7. A tandem axle four spring suspension according to Claim 6 wherein each of said rotational means further includes a fastener member secured to the associated axle and passing therefrom successively through bores in said first elastomeric member, the associated spring, and said second elastomeric member with the bore in the associated spring being oversized to accommodate the rotational spring movement.

8. A tandem axle four spring suspension for a ground vehicle comprising:
   a. front and rear axles adapted to extend transversely of the vehicular frame structure;
   b. a front pair of longitudinally oriented and transversely spaced springs adapted to be disposed at left and right sides of such frame structure in association with said front axle;

c. a rear pair of longitudinally oriented and transversely spaced springs adapted to be disposed at left and right sides of such frame structure in association with said rear axle;

d. an equalizer adapted to be disposed at each side of such frame structure between the front and rear springs on that side of the frame structure and operative to permit load sharing between such springs;

e. means adapted to interconnect each axle with the frame structure and operative to restrain axle torque generated in response to vehicular braking; and

f. means connecting each said spring intermediate its ends to its associated axle and including means operative to allow each said spring to rotate relative to its associated axle.

Prior Art

FIG.1.

FIG.2.

2/2

0045411

FIG.3.

FIG.4.

FIG.5.

FIG.6.